# EUROPEAN PATENT SPECIFICATION

(11) **EP 3 989 120 B1**
(45) Date of publication and mention of the grant of the patent: **15.04.2026**
(21) Application number: 20882890.5
(22) Date of filing: 10.10.2020
(51) Int. Cl.: G06N 3/04, G06N 3/08

(54) **METHOD AND DEVICE FOR GENERATING TRAINING SAMPLE FOR SEMANTIC SEGMENTATION MODEL, STORAGE MEDIUM, AND ELECTRONIC DEVICE**
VERFAHREN UND VORRICHTUNG ZUR ERZEUGUNG EINER TRAININGSPROBE FÜR MODELL ZUR SEMANTISCHEN SEGMENTIERUNG, SPEICHERMEDIUM UND ELEKTRONISCHE VORRICHTUNG
PROCÉDÉ ET DISPOSITIF DE PRODUCTION D'ÉCHANTILLON D'ENTRAÎNEMENT POUR MODÈLE DE SEGMENTATION SÉMANTIQUE, SUPPORT DE STOCKAGE ET DISPOSITIF ÉLECTRONIQUE

(30) Priority: 29.10.2019 CN 201911039504
(43) Date of publication of application: 27.04.2022
(73) Proprietor: Tencent Technology (Shenzhen) Company Limited, Shenzhen, Guangdong, 518057 (CN)
(72) Inventor: SUN, Zixun, Shenzhen, Guangdong 518057 (CN)
(74) Representative: Novagraaf International SA
(86) International application number: PCT/CN2020/120140
(87) International publication number: WO 2021/082885

(56) References cited:
- CN-A- 102 982 578
- CN-A- 108 509 855
- CN-A- 109 224 444
- CN-A- 109 635 853
- CN-A- 109 635 853
- CN-A- 110 314 379
- CN-A- 110 363 175
- CN-A- 110 852 332
- CN-B- 105 069 846
- US-A1- 2018 276 821

## Description

### RELATED APPLICATION

This application claims priority to Chinese Patent Application No. 201911039504.3, entitled "METHOD AND APPARATUS FOR GENERATING TRAINING SAMPLE, STORAGE MEDIUM, AND ELECTRONIC DEVICE", filed on October 29, 2019 with China National Intellectual Property Administration.

### FIELD OF THE TECHNOLOGY

This disclosure relates to the field of computers, and in particular, to a method and an apparatus for generating a training sample for a semantic segmentation model, a storage medium, and an electronic device.

### BACKGROUND OF THE DISCLOSURE

Currently, when recommending a game to a user, a recommendation system based on game contents usually generates a propaganda poster related to the game. The propaganda poster may include contents such as character images and introduction of character skills, for the user to quickly understand basic information of the game. Generally, the character images can be automatically recognized from a game scene by using a pre-trained deep learning model.

CN109635853A discloses a method for automatically generating an artificial intelligence training sample based on a computer graphics technology. The method comprises: building a virtual scene according to the requirements of a to-be-trained sample, and adjusting a lens parameter; dynamically generating a training sample by inputting control parameters; and obtaining specific information contained in the training samples to generate labels of the corresponding training samples.

### SUMMARY

The invention is defined by the appended claims. An embodiment of this disclosure provides a method for generating a training sample for a semantic segmentation model, the semantic segmentation model being configured to segment an image to obtain an object, the method being performed by an electronic device, and including:
obtaining an object identifier of a training object and a model file corresponding to the object identifier, the model file including a three-dimensional model of the training object and a skin picture set, the skin picture set including a plurality of solid-color skin pictures and a plurality of colorful skin pictures;
determining a transformed model of the three-dimensional model by rotating the three-dimensional model by an orientation angle;
generating a sample image group corresponding to the transformed model according to the plurality of colorful skin pictures and the transformed model, the sample image group including a plurality of sample images each corresponding to one of the plurality of colorful skin pictures;
generating a label image for the sample image group according to the object identifier, the plurality of solid-color skin pictures, and the transformed model, the label image being used for labeling the sample images in the sample image group, the label image being an image obtained by labeling a contour and an object identifier of an object on the sample image, an association relationship between the sample image group and the corresponding label image being established for the same object, orientation angles, and preset projection directions; and
generating a training sample of the training object according to the label image and the sample image group, to train the semantic segmentation model by using the training sample of the training object.

An embodiment of this disclosure further provides an apparatus for generating a training sample for a semantic segmentation model, the semantic segmentation model being configured to segment an image to obtain an object, the apparatus including:
an obtaining module, configured to obtain an object identifier of a training object and a model file corresponding to the object identifier, the model file including a three-dimensional model of the training object and a skin picture set, the skin picture set including a plurality of solid-color skin pictures and a plurality of colorful skin pictures;
a determining module, configured to determine a transformed model of the three-dimensional model by rotating the three-dimensional model by an orientation angle;
a first generation module, configured to generate a sample image group corresponding to the transformed model according to the plurality of colorful skin pictures and the transformed model, the sample image group including a plurality of sample images each corresponding to one the plurality of colorful skin pictures;
a second generation module, configured to generate a label image for the sample image group according to the object identifier, black and white skin pictures, and the transformed model, the label image being used for labeling the sample images in the sample image group, the label image being an image obtained by labeling a contour and an object identifier of an object on the sample image, an association relationship between the sample image group and the corresponding label image being established for the same object, orientation angles, and preset projection directions; and
a third generation module, configured to generate a training sample of the training object according to the label image and the sample image group, to train the semantic segmentation model by using the training sample of the training object.

The first generation module is specifically configured to:
render the transformed model according to each of the colorful skin pictures, to obtain first rendered models;
project each of the first rendered models onto a game scene at a preset projection direction, to obtain a plurality of first projection scenes;
generate an image of each of the first projection scenes, and take the generated image as a sample image; and
group the sample images corresponding to the preset projection direction and the transformed model as the sample image group.

The plurality of solid-color skin pictures include a black skin picture and a white skin picture, and the second generation module specifically includes:
a first determining unit, configured to determine a first reference image group according to the black skin picture, a plurality of preset projection directions, and the transformed model;
a second determining unit, configured to determine a second reference image group according to the white skin picture, the plurality of preset projection directions, and the transformed model; and
a generation unit, configured to generate the label image for the sample image group according to the object identifier, the first reference image group, and the second reference image group.

The first determining unit is specifically configured to:
render the transformed model according to the black skin picture, to obtain a second rendered model;
project the second rendered model onto a game scene according to the plurality of preset projection directions, to obtain a plurality of second projection scenes, each of the projection directions corresponding to one of the second projection scenes;
generate an image of each of the second projection scenes, and use the generated image as a first reference image; and
group the first reference images as the first reference image group.

The generation unit is specifically configured to:
obtain a first reference image and a second reference image that correspond to a same preset projection direction from a first reference image group and a second reference image group that correspond to a same transformed model;
convert a color of regions of black pixels in the obtained first reference image into white, and convert a color of remaining region in the first reference image into black;
convert a color of regions in the obtained second reference image except for regions of white pixels into black; and
generate the label image corresponding to the sample image group according to the object identifier, the converted first reference image, and the converted second reference image.

The generation unit is specifically configured to:
determine an overlapping region where white pixels in the converted first reference image overlap with the white pixels in the converted second reference image;
convert a color of regions in the converted first reference image or the converted second reference image except for the overlapping region into black, to obtain a target reference image; and
convert a color of regions of white pixels in the target reference image into a color having a color value equal to a value of the object identifier, to obtain the label image for the sample image group corresponding to the same transformed model and the same preset projection direction.

The apparatus for generating a training sample further includes a training module and a segmentation module.

The training module is configured to: after the third generation module generates the training sample of the training object according to the label image and the sample image group, input the training sample into a preset semantic segmentation model for training, to obtain a trained model.

The segmentation module is configured to: obtain an object segmentation instruction, the object segmentation instruction carrying a target game image, the target game image including at least one segmentation object; and input the target game image into the trained model according to the object segmentation instruction, to obtain an object contour and an object identifier of the segmentation object.

The segmentation module is further configured to:
after the object contour and the object identifier of the segmentation object are obtained, extract an image corresponding to the segmentation object from the target game image according to the object contour;
obtain a target background image and a description of the object;
project the extracted image onto the target background image, to obtain a projection image; and
generate the description on the projection image, to obtain a cover image.

The obtaining module is further configured to:
before obtaining an object identifier of a training object and a model file corresponding to the object identifier, determine an installation path of a game application;
determine, according to the installation path, a plurality of storage files with file suffixes matching a preset character string;
group the plurality of storage files according to file names of the storage files, to obtain a plurality of storage file groups, file names in each of the storage file groups including a name of the same game object;
determine an object identifier of each game object; and
extract, for each game object, a model file from a storage file group corresponding to the game object, and copy and save the model file and the object identifier.

An embodiment of this disclosure further provides a computer-readable storage medium, storing a plurality of instructions, the plurality of instructions being configured to be loaded by a processor, to perform the method for generating a training sample for a semantic segmentation model according to the embodiments of this disclosure.

An embodiment of this disclosure further provides an electronic device, including a processor and a memory, the processor being electrically connected to the memory, the memory being configured to store instructions and data, and the processor being configured to perform the operations in the method for generating a training sample for a semantic segmentation model according to the embodiments of this disclosure.

### BRIEF DESCRIPTION OF THE DRAWINGS

The specific implementations of this disclosure are described below in detail with reference to the drawings, to make the technical solutions and other beneficial effects of this disclosure obvious.
FIG. 1 is a schematic diagram of a scenario of a system for generating a training sample according to an embodiment of this disclosure.
FIG. 2A is a schematic flowchart of a method for generating a training sample according to an embodiment of this disclosure.
FIG. 2B is a flowchart of generating a label image for each sample image group according to an object identifier, multiple solid-color skin pictures, and the transformed model in step S104 according to an embodiment of this disclosure.
FIG. 2C is a flowchart of determining multiple first reference image groups according to the black skin picture, multiple preset projection directions, and the transformed model in step S1041 according to an embodiment of this disclosure.
FIG. 2D is a flowchart of generating the label image for each sample image group according to the object identifier, multiple first reference image groups, and multiple second reference image groups in step S1043 according to an embodiment of this disclosure.
FIG. 2E is a flowchart of generating the label image of the corresponding sample image group according to the object identifier, the converted first reference image, and the converted second reference image in step S434 according to an embodiment of this disclosure.
FIG. 2F is a flowchart of a method for generating a training sample according to an embodiment of this disclosure.
FIG. 2G is a flowchart of a method for generating a training sample according to an embodiment of this disclosure.
FIG. 3 is a schematic diagram showing some storage files in a package according to an embodiment of this disclosure.
FIG. 4 is another schematic flowchart of a method for generating a training sample according to an embodiment of this disclosure.
FIG. 5 is a schematic framework diagram of a training sample generation procedure according to an embodiment of this disclosure.
FIG. 6 is a schematic diagram of a comparison between an image before model processing and an image after model processing according to an embodiment of this disclosure.
FIG. 7 is a schematic flowchart of a cover image generation process according to an embodiment of this disclosure.
FIG. 8 is a schematic structural diagram of an apparatus for generating a training sample according to an embodiment of this disclosure.
FIG. 9 is another schematic structural diagram of an apparatus for generating a training sample according to an embodiment of this disclosure.
FIG. 10 is another schematic structural diagram of an apparatus for generating a training sample according to an embodiment of this disclosure.
FIG. 11 is a schematic structural diagram of an electronic device according to an embodiment of this disclosure.

### DESCRIPTION OF EMBODIMENTS

The following clearly and completely describes the technical solutions in embodiments of this disclosure with reference to the accompanying drawings in the embodiments of this disclosure. Apparently, the described embodiments are merely some rather than all of the embodiments of this disclosure. Any other embodiments obtained by a person skilled in the art based on the embodiments of this disclosure without creative efforts shall fall within the scope of this disclosure.

Generally, samples for training a deep learning model for automatically recognizing a character image are manually prepared. The game "Honor of Kings" is used as an example. To enable a deep learning model to well recognize a hero, about 1000 training samples are need. For each training sample, a sample image is obtained by manually taking a screenshot from a game scene for the hero with a different game skin and at a different map position, and the sample image needs to be manually labeled. Assuming that there are 100 heroes in "Honor of Kings", 100,000 training samples need to be prepared through manual screenshots and labeling. If one person can label 150 samples per hour and performs labeling for 8 hours one day, it requires more than 83 days of work for one person. It is evident that this manner of generating training samples has extremely low efficiency and high costs.

Therefore, the embodiments of this disclosure provide a method and apparatus for generating a training sample, a storage medium, and an electronic device, to automatically generate a sample image and a label image without manual screenshots and labeling.

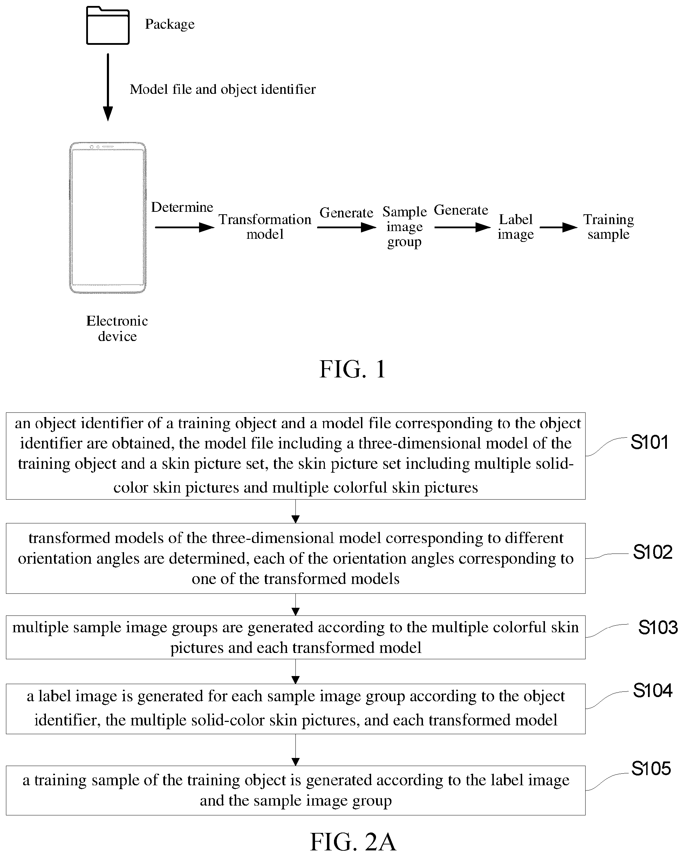

FIG. 1 is a schematic diagram of a scenario of a system for generating a training sample. The system for generating a training sample may include any apparatus for generating a training sample provided in the embodiments of this disclosure. The apparatus for generating a training sample may be integrated in an electronic device. The electronic device may be a backend server of a game provider.

In some embodiments, the electronic device may include an artificial intelligence (AI) processor. The AI processor is configured for computing related to machine learning.

AI refers to theory, method, technology, and application system that utilize a digital computer or a machine controlled by a digital computer to simulate, extend, and expand human intelligence, perceive the environment, acquire knowledge, and obtain optimal result based on knowledge. In other words, AI is a comprehensive technology of computer science, which attempts to understand the essence of intelligence and produce a new type of intelligent machine that can react in a similar way to human intelligence. AI is to study design principles and implementations of various intelligent machines, to endow machines with the functions of perception, reasoning, and decision-making.

The AI technology is a comprehensive discipline, covering a wide range of fields and involving both hardware technology and software technology. Basic AI technologies generally include technologies such as sensor, dedicated AI chip, cloud computing, distributed storage, big data processing technology, operation/interaction system, and mechatronics. AI software technologies mainly include several major directions such as computer vision (CV) technology, speech processing technology, natural language processing technology, and machine learning/deep learning.

Machine learning (ML) is a multi-disciplinary subject involving multiple disciplines such as probability theory, statistics, approximation theory, convex analysis, and algorithm complexity theory. ML specializes in studying how a computer simulates or implements human learning behavior to obtain new knowledge or skills, and reorganize existing knowledge structure so as to keep improving its performance. ML is the core of AI, is a basic way to make the computer intelligent, and is applied to various fields of AI. ML and deep learning generally include technologies such as artificial neural network, belief network, reinforcement learning, transfer learning, inductive learning, and learning from demonstrations.

Due to successful application of ML in the field of vision technology, researchers also introduce ML to the field of image processing. For example, ML is applied to recognize a game object in a game image, perform segmentation with respect to the recognized game object to obtain a contour and an identifier of the game object, and generate a propaganda poster including the game object obtained through segmentation. The electronic device may obtain an object identifier of a training object and a model file corresponding to the object identifier, the model file including a three-dimensional model and a skin picture set, the skin picture set including multiple solid-color skin pictures and multiple colorful skin pictures; determine transformed models of the three-dimensional model corresponding to different orientation angles, each of the orientation angles corresponding to one of the transformed models; generate, according to the multiple colorful skins and each of the transformed models, multiple sample image groups corresponding to the transformed models; generate a label image for each sample image group according to the object identifier, the black skin pictures, the white skins, and each transformed model; and generate a training sample of the training object according to the label image and the sample image group.

The object identifier is a code manually generated by a user or automatically generated by a system for each game object (including the training object), and is used for uniquely identifying the game object in a game. The three-dimensional model refers to a coordinate model formed by three-dimension coordinate points, and is used for describing a shape and a contour of the game object. Generally, different game objects have different three-dimensional models. The orientation angle may be manually preset. For example, the orientation angles may be selected from 0° to 360° at an interval of every 30°. The transformed model is obtained by rotating the three-dimensional model orienting a default angle by 0°, 30°, or 60°. The label image is used for labeling the sample images in the sample image group, for example, labeling a contour, an appearance, and an object identifier of a game object on a sample image. For sample images in the same sample image group, a same label image is used.

For example, referring to FIG. 1, the electronic device may obtain a model file and an object identifier of a training object from a game package; export a three-dimensional model in the model file by using preset software such as unity3D software; orient the three-dimensional model at different orientation angles (such as 0, 30°, ..., 360°), and use the three-dimensional model in a different orientation as a different transformed model; subsequently generate multiple sample image groups according to colorful skin pictures and a transformed model; subsequently generate a label image for each of the sample image groups according to the object identifier, solid-color skin pictures, and the transformed model; and use each sample image and the corresponding label image as a training sample for subsequent model training.

FIG. 2A is a schematic flowchart of a method for generating a training sample according to an embodiment of this disclosure. The method for generating a training sample is applicable to an electronic device. The electronic device may be a backend server of a game provider. A specific procedure may include the following steps.

In S101, an object identifier of a training object and a model file corresponding to the object identifier are obtained, the model file including a three-dimensional model of the training object and a skin picture set, the skin picture set including multiple solid-color skin pictures and multiple colorful skin pictures.

In this embodiment, the object identifier is a code manually generated by a user or automatically generated by a system for each game object (including the training object), and is used for uniquely identifying the game object in a game. Skin pictures in the skin picture set are textures. The colorful skin pictures may be generated by randomly selecting four colors from 256-color palette each time, and a quantity of the colorful skin pictures may be 256. The multiple solid-color skin pictures refer to textures with a single color, and may include black skin pictures and white skin pictures. The black skin picture refers to a solid-color skin picture in completely black, and the white skin picture refers to a solid-color skin picture in completely white. The three-dimensional model refers to a coordinate model formed by three-dimension coordinate points, and is used for describing a shape and a contour of the game object. Generally, different game objects have different three-dimensional models.

The model file may be manually inputted by the user, for example, manually extracted from a game package, or may be automatically obtained by the system. In this case, before step S101, the method for generating a training sample further includes:
determining an installation path of a game application;
determining, according to the installation path, multiple storage files with file suffixes matching a preset character string;
grouping the multiple storage files according to file names of the storage files, to obtain multiple storage file groups, file names in each of the storage file groups including a name of a same game object;
determining an object identifier of each game object; and
extracting, for each game object, a model file from a storage file group corresponding to the game object, and copying and saving the model file and the object identifier.

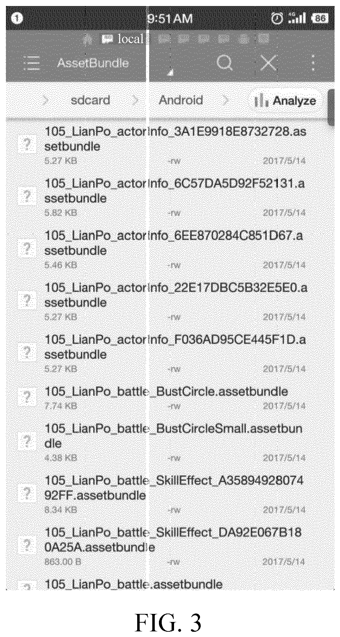

In this embodiment, after the game application is installed, a storage location of the game package may be located based on the installation path, and all storage files with suffixes matching the preset character string at the storage location are extracted; the storage files are grouped according to names of game objects in a way that storage files of the same game object are grouped into one group. For example, some storage files at the storage location may be as shown in FIG. 3, where the installation path may
be ..//com.tencent.tmgp.sgame/files/Resources/AssetBundle/, and the preset character string may be ".assetbundle". It can be seen from FIG. 3 that storage files displayed in the current page all include the same name "LianPo", that is to say that all these storage files are associated with a game object "LianPo" having an object identifier of 105.

In S102, transformed models of the three-dimensional model corresponding to different orientation angles are determined, each of the orientation angles corresponding to one of the transformed models.

In this embodiment, the orientation angles may be manually preset. For example, 12 angles may be selected from 0° to 360° at an interval of every 30° as orientation angles, such as 0°, 30°, or 60°. Correspondingly, the three-dimensional model rotates by 0°, 30°, or 60° from a default angle to be the transformed model.

In S103, multiple sample image groups corresponding to each transformed model are generated according to the multiple colorful skin pictures and each transformed model, each of the sample image groups including multiple sample images.

For example, step S103 may specifically include:
rendering each of the transformed models according to each of the colorful skin pictures, to obtain first rendered models;
projecting the first rendered models onto a game scene according to multiple preset projection directions, to obtain multiple first projection scenes, each of the projection directions corresponding to one of the first projection scenes;
generating an image of each of the first projection scenes, and using the generated image as a sample image; and
grouping sample images corresponding to a same preset projection direction and a same transformed model into one group, to obtain the multiple sample image groups.

In this embodiment, the first rendered model is obtained by rendering a transformed model with a colorful skin picture as a texture. The preset projection directions may be manually set. Due to translation invariance in deep learning network, it is unnecessary to generate images at various positions, and only images at left position, at middle position, and at right position are needed. In other words, the projection directions may be set to three types: a left region, a middle region, and a right region. The game scene is a three-dimensional scene. Coordinates of the first rendered model may be updated based on a coordinate system of the game scene, to project the first rendered model onto the game scene. Subsequently, a three-dimensional first projection scene may be outputted as a two-dimensional image by using a screen recording function of preset software such as unity3D software, to obtain a sample image. That is, animation of the first projection scene is generated by using the preset software, for example, unity3D software, and then an image is captured from the animation by using a screenshot function, to be taken as the sample image.

Sample images corresponding to the same projection direction, the same orientation angle, and the same game object may be grouped into one group. For example, assuming that an object identifier is 075, the orientation angle O is 30°, and the projection direction P is LEFT, the sample image group may be named as 075_N1_ {001,002,..256} _O_30°_P_LEFT, and sample images in the sample image group may be named as 075_N1_xx _O_30°_P_LEFT, where N1 represents a colorful skin picture; and assuming that there are 256 colorful skin pictures sequentially marked as 001-256, xx is any value of {001,002,..256}, for example, 002.

In S104, a label image is generated for each sample image group according to the object identifier, the multiple solid-color skin pictures, and each transformed model, the label image being used for labeling the sample images in the sample image group.

In this embodiment, the label image is used for labeling the sample images in the sample image group, for example, labeling a contour, an appearance, and an object identifier of a game object on a sample image. For sample images in the same sample image group, the same label image is used. In the related art, a sample image is labeled manually, which has low efficiency.

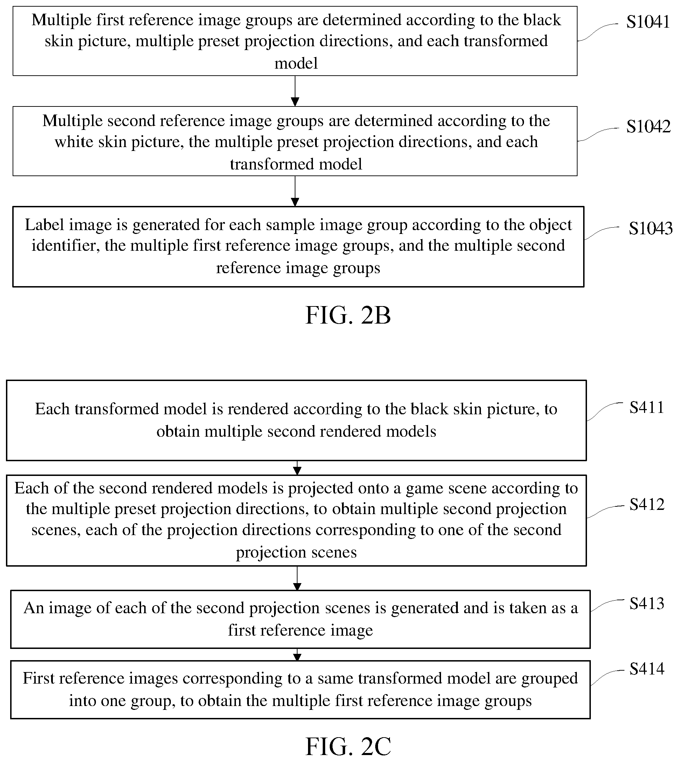

In some embodiments, the multiple solid-color skin pictures include a black skin picture and a white skin picture. FIG. 2B is a flowchart of generating a label image for each sample image group according to the object identifier, the multiple solid-color skin pictures, and the transformed model in step S104. As shown in FIG. 2B, step S104 may specifically include the following steps.

In S1041, multiple first reference image groups are determined according to the black skin picture, multiple preset projection directions, and each transformed model.

In S1042, multiple second reference image groups are determined according to the white skin picture, the multiple preset projection directions, and each transformed model.

In S1043, the label image is generated for each sample image group according to the object identifier, the multiple first reference image groups, and the multiple second reference image groups.

In this embodiment, a game object may be colored in black and white separately, and a first reference image group is generated for the black game object at a same orientation angle (for example, 330°) with different projection directions (such as left, middle, and right), and a second reference image group is generated for the white game object at the same orientation angle with different projection directions.

It is noted that reference images in a same first reference image group or second reference image group may be named according to a specific rule. For example, assuming that an object identifier is 075, an orientation angle O is 30°, P represents preset projection directions (such as LEFT, MIDDLE, and RIGHT), and N0 represents a black skin picture or a white skin picture (such as black or white), a naming format of the first reference image group may be 075_N0_black_O_30°_P_ {LEFT, MIDDLE, RIGHT}, where a naming format of a single first reference image may be 075_N0_black_O_30°_P_zz, zz being any one of {LEFT, MIDDLE, RIGHT}, and a naming format of a single second reference image group may be 075_N0_white_0_30°_P_yy, yy being any one of {LEFT, MIDDLE, RIGHT}.

The first reference image group and the second reference image group may be generated similarly. The generation of the first reference image group is described in detail and the description of the generation of the second reference image group is omitted herein.

FIG. 2C is a flowchart of determining multiple first reference image groups according to the black skin picture, multiple preset projection directions, and the transformed model in step S1041. As shown in FIG. 2C, step S1041 specifically includes the following steps.

In step S411, each transformed model is rendered according to the black skin picture, to obtain multiple second rendered models.

In step S412, each of the second rendered models is projected onto a game scene according to the multiple preset projection directions, to obtain multiple second projection scenes, each of the projection directions corresponding to one of the second projection scenes.

In step S413, an image of each of the second projection scenes is generated and is taken as a first reference image.

In step S414, first reference images corresponding to a same transformed model are grouped into one group, to obtain the multiple first reference image groups.

In this embodiment, the second rendered model is obtained by rendering a transformed model with the black skin picture as a texture. Coordinates of the second rendered model may be updated based on a coordinate system of the game scene, to project the second rendered model onto the game scene. Subsequently, a three-dimensional second projection scene may be outputted as a two-dimensional image by using a screen recording function of preset software such as unity3D software, to obtain a first reference image.

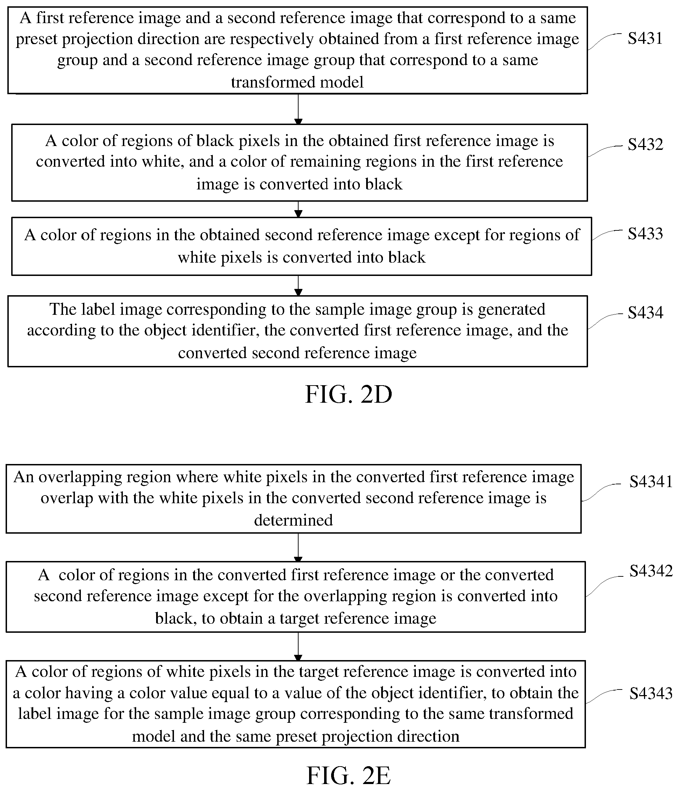

FIG. 2D is a flowchart of generating the label image for each sample image group according to the object identifier, the multiple first reference image groups, and the multiple second reference image groups in step S1043. As shown in FIG. 2D, the step S1043 may specifically include the following steps.

In step S431, a first reference image and a second reference image that correspond to a same preset projection direction are respectively obtained from a first reference image group and a second reference image group that correspond to a same transformed model.

In step S432, a color of regions of black pixels in the obtained first reference image is converted into white, and a color of remaining regions in the first reference image is converted into black.

In step S433, a color of regions in the obtained second reference image except for regions of white pixels is converted into black.

In step S434, the label image corresponding to the sample image group is generated according to the object identifier, the converted first reference image, and the converted second reference image.

In this embodiment, by color conversion of the first reference image and the second reference image, it can be ensured that game character is in white on each of the two reference images. However, a white region is inevitable due to existence of the sky and a black region may be present due to something (for example, buildings) other than the game character on a game map, which may interfere with recognition of the game objects, consequently affecting the accuracy of object segmentation. Therefore, the interference factors need to be filtered out.

FIG. 2E is a flowchart of generating the label image corresponding to the sample image group according to the object identifier, the converted first reference image, and the converted second reference image in step S434. As shown in FIG. 2E, step S434 includes the following steps.

In step S4341, an overlapping region where white pixels in the converted first reference image overlap with the white pixels in the converted second reference image is determined.

In step S4342, a color of regions in the converted first reference image or the converted second reference image except for the overlapping region is converted into black, to obtain a target reference image.

In step S4343, a color of regions of white pixels in the target reference image is converted into a color having a color value equal to a value of the object identifier, to obtain the label image for the sample image group corresponding to the same transformed model and the same preset projection direction.

In this embodiment, interferences affecting recognition of contours of game objects inevitably exist in the first reference image and the second reference image. However, because there is a high probability that the interferences in the two reference images are different from each other, when the two reference images are overlaid, non-overlapping region is usually a region in which the interferences are located, and an overlapping region is a region in which the game object is located. Therefore, contour of the game object is easily recognized; and subsequently the recognized object contour is colored with a value of the object identifier, so that the contour and the object identifier can be associated.

In S105, a training sample of the training object is generated according to the label image and the sample image group, to train the semantic segmentation model by using the training sample of the training object.

In this embodiment, each sample image and a corresponding label image may be used as a training sample. Generally, different sample images in a same sample image group all correspond to a same label image. For example, for a sample image group 075_N1_{001,002,..256}_O_30°_P_LEFT, a corresponding label image thereof may be 075_ O_30°_P_LEFT. That is, an association relationship between the sample image group and the corresponding label image is established for the same game object, orientation angle, and preset projection direction.

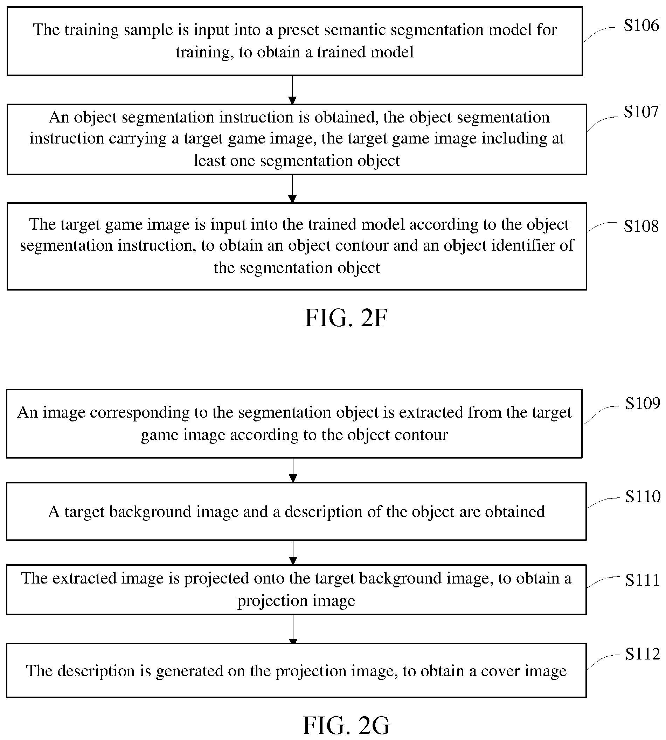

In addition, after a training sample of a game object is generated, the training sample may be used to train a deep learning model, to facilitate subsequent recognition of the game object by the trained model. FIG. 2F is a flowchart of a method for generating a training sample. As shown in FIG. 2F, subsequent to step S105, the method for generating a training sample may further include the following steps.

In step S106, the training sample is input into a preset semantic segmentation model for training, to obtain a trained model.

In step S107, an object segmentation instruction is obtained, the object segmentation instruction carrying a target game image, the target game image including at least one segmentation object.

In step S108, the target game image is input into the trained model according to the object segmentation instruction, to obtain an object contour and an object identifier of the segmentation object.

In this embodiment, the semantic segmentation model may include a fully convolutional network (FCN) model, a SegNet model, a Unet model, or the like. When the user intends to recognize game objects (namely, segmentation objects) on a game image, the game image may be input into the trained model as a target game image, to determine a shape, a contour, and an object identifier of each game object on the game image, thereby obtaining the game objects through segmentation.

In addition, after obtaining a game object from a game image, a propaganda poster may be generated based on the game object. FIG. 2G is a flowchart of a method for generating a training sample. As shown in FIG. 2G, after the object contour and the object identifier of the segmentation object are obtained, the method for generating a training sample may further include the following steps.

In step S109, an image corresponding to the segmentation object is extracted from the target game image according to the object contour.

In step S110, a target background image and a description of the object are obtained.

In step S111, the extracted image is projected onto the target background image, to obtain a projection image.

In step S112, the description is generated on the projection image, to obtain a cover image.

In this embodiment, the target background image may be extracted from the game scene, or may be specially designed. The description is mainly used for describing characteristic information such as skill or type of the object. The cover image generated based on the object, the target background image, and the description can be used to make a game promotion poster, a game guide, and the like.

In the method for generating a training sample provided in this disclosure, an object identifier of a training object and a model file corresponding to the object identifier are obtained, the model file including a three-dimensional model and a skin picture set, the skin picture set including multiple solid-color skin pictures and multiple colorful skin pictures; subsequently transformed models of the three-dimensional model corresponding to different orientation angles are determined, each of the orientation angles corresponding to one of the transformed models; multiple sample image groups are generated according to the multiple colorful skin pictures and the transformed model; subsequently a label image is generated for each sample image group according to the object identifier, the multiple solid-color skin pictures, and the transformed model; and a training sample of the training object is generated according to the label image and the sample image group. Therefore, sample images and the label image can be automatically generated without manual screenshots and labeling. The method is convenient, and is efficient and effective in sample generation.

On the basis of the method described in the foregoing embodiments, the application of the method for generating a training sample in a server, which for example is a backend server of the game Honor of Kings, is described below.

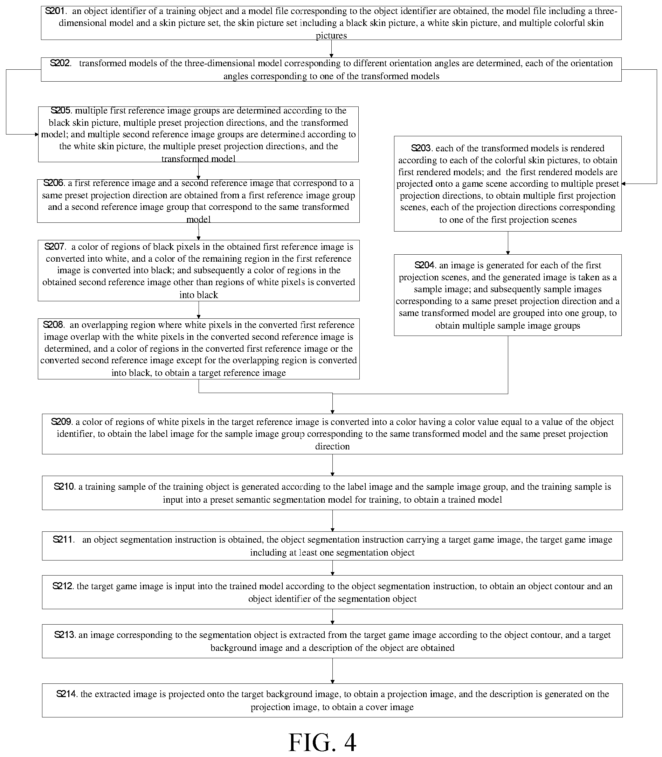

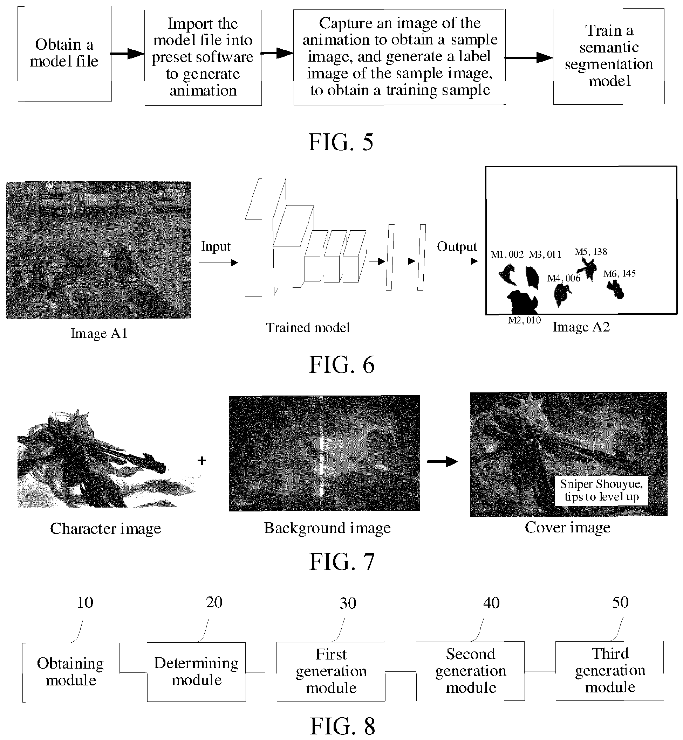

FIG. 4 is a schematic flowchart of a method for generating a training sample according to an embodiment of this disclosure. FIG. 5 is a schematic framework diagram of a training sample generation procedure according to an embodiment of this disclosure. The method for generating a training sample includes the following steps.

In S201, an object identifier of a training object and a model file corresponding to the object identifier are obtained, the model file including a three-dimensional model and a skin picture set, the skin picture set including a black skin picture, a white skin picture, and multiple colorful skin pictures.

For example, the colorful skin pictures may be generated by randomly selecting four colors from a 256-color palette each time, and a quantity of the colorful skin pictures may be 256. The black skin picture refers to a solid-color skin picture in completely black, and the white skin picture refers to a solid-color skin picture in completely white. The three-dimensional model refers to a coordinate model formed by three-dimension coordinate points, and is used for describing a shape and a contour of the game object.

The model file may be automatically obtained by a system. That is, before step S201, the method for generating a training sample further includes:
determining an installation path of a game application;
determining, according to the installation path, multiple storage files with file suffixes matching a preset character string;
grouping the multiple storage files according to file names of the storage files, to obtain multiple storage file groups, file names in each of the storage file groups including a name of a same game object;
determining an object identifier of each game object; and
extracting, for each game object, a model file from a storage file group corresponding to the game object, and copying and saving the model file and the object identifier.

For example, some storage files at the storage location may be as shown in FIG. 3, where the installation path may be ..//com.tencent.tmgp.sgame/files/Resources/AssetBundle/, and the preset character string may be ".assetbundle". It can be seen from FIG. 3 that storage files displayed in the current page all include the same name "LianPo", to say that all these storage files are associated with a game object "LianPo" with an object identifier of 105.

In S202, transformed models of the three-dimensional model corresponding to different orientation angles are determined, each of the orientation angles corresponding to one of the transformed models.

In S203, each of the transformed models is rendered according to each of the colorful skin pictures, to obtain first rendered models; and the first rendered models are projected onto a game scene according to multiple preset projection directions, to obtain multiple first projection scenes, each of the projection directions corresponding to one of the first projection scenes.

In S204, an image is generated for each of the first projection scenes, and the generated image is taken as a sample image; and subsequently sample images corresponding to a same preset projection direction and a same transformed model are grouped into one group, to obtain multiple sample image groups.

For example, 12 angles may be selected from 0° to 360° at an interval of every 30° as orientation angles, such as 0°, 30°, or 60°. The preset projection directions may include LEFT, MIDDLE, and RIGHT. Animation of the first projection scene is generated by using preset software, for example, unity3D software, and an image is captured from the animation by using a screenshot function, to be taken as the sample image.

Assuming that an object identifier is 075, the orientation angle O is 30°, and the projection direction P is LEFT, the sample image group may be named as 075_N1_ {001,002,..256} _O_30°_P_LEFT, and sample images in the sample image group may be named as 075_N1_xx _O_30°_P_LEFT, where N1 represents a colorful skin picture; and assuming that there are 256 colorful skin pictures sequentially marked as 001-256, xx is any value of {001,002,..256}, for example, 002.

In S205, multiple first reference image groups are determined according to the black skin picture, multiple preset projection directions, and the transformed model; and multiple second reference image groups are determined according to the white skin picture, the multiple preset projection directions, and the transformed model.

For example, assuming that an object identifier is 075, an orientation angle O is 30°, P represents preset projection directions (such as LEFT, MIDDLE, and RIGHT), and N0 represents a black skin picture or a white skin picture (such as black or white), a naming format of the first reference image group may be 075_N0_black_O_30°_P_ {LEFT, MIDDLE, RIGHT}, where a naming format of a single first reference image may be 075_N0_black_O_30°_P_zz, zz being any one of {LEFT, MIDDLE, RIGHT}, and a naming format of a single second reference image group may be 075_N0_white_O_30°_P_yy, yy being any one of {LEFT, MIDDLE, RIGHT}.

The first reference image group, the second reference image group, and the sample image group are generated similarly. The generating of the first reference image group is described in detail, and the description of the generating of the second reference image group is omitted herein.

For example, the foregoing step of determining multiple first reference image groups according to the black skin picture, multiple preset projection directions, and the transformed model specifically includes:
rendering the transformed model according to the black skin picture, to obtain a second rendered model;
projecting the second rendered model onto the game scene according to the multiple preset projection directions, to obtain multiple second projection scenes, each of the projection directions corresponding to one of the second projection scenes;
generating an image for each of the second projection scenes, and taking the generated image as a first reference image; and
grouping first reference images corresponding to a same transformed model into one group, to obtain the multiple first reference image groups.

In S206, a first reference image and a second reference image that correspond to a same preset projection direction are obtained from a first reference image group and a second reference image group that correspond to the same transformed model.

In S207, a color of regions of black pixels in the obtained first reference image is converted into white, and a color of the remaining region in the first reference image is converted into black; and subsequently a color of regions in the obtained second reference image other than regions of white pixels is converted into black.

In S208, an overlapping region where white pixels in the converted first reference image overlap with the white pixels in the converted second reference image is determined, and a color of regions in the converted first reference image or the converted second reference image except for the overlapping region is converted into black, to obtain a target reference image.

In S209, a color of regions of white pixels in the target reference image is converted into a color having a color value equal to a value of the object identifier, to obtain the label image for the sample image group corresponding to the same transformed model and the same preset projection direction.

For example, colors of a first reference image 075_N0_black_O_30°_P_ LEFT and a second reference image 075_N0_white_O_30°_P_LEFT may be converted, and the two converted reference images are overlapped; subsequently a color of regions except for the overlapping region is converted into black, and a color value (namely, an RGB value) of the overlapping region is converted into 075, to obtain a label image 075 _O_30°_P_ LEFT; and the label image is used as a label image for a sample image group 075_N1_ {001,002,..256} O_30°_P_LEFT.

In S210, a training sample of the training object is generated according to the label image and the sample image group, and the training sample is input into a preset semantic segmentation model for training, to obtain a trained model.

In S211, an object segmentation instruction is obtained, the object segmentation instruction carrying a target game image, the target game image including at least one segmentation object.

In S212, the target game image is input into the trained model according to the object segmentation instruction, to obtain an object contour and an object identifier of the segmentation object.

For example, FIG. 6 shows an input image (namely, the target game image) A1 and an output image A2 of the trained model. Six segmentation objects M1 to M6 are clearly shown on A2, and a color value of each segmentation object equals to an object identifier thereof. For example, the color values may be 002, 010, 011, 006, 138, 145 from left to right.

In S213, an image corresponding to the segmentation object is extracted from the target game image according to the object contour, and a target background image and a description of the object are obtained.

In S214, the extracted image is projected onto the target background image, to obtain a projection image, and the description is generated on the projection image, to obtain a cover image.

For example, FIG. 7 shows a cover image of a hero "Baili Shouyue" in the game Honor of Kings. In a generation process of the cover image, a character image of "Baili Shouyue" is obtained through segmentation by using the trained model. Subsequently, the character image is superimposed on a prepared background image, a description box is generated at any position of the background image, for example at a lower right position, and a description of the hero "Baili Shouyue", for example, "Sniper Shouyue, tips to level up", is generated in the description box.

On the basis of the method described in the foregoing embodiments, this embodiment further provides a description from the perspective of an apparatus for generating a training sample. The apparatus for generating a training sample may be specifically implemented as an independent entity, or may be integrated in an electronic device.

FIG. 8 specifically describes an apparatus for generating a training sample for a semantic segmentation model according to an embodiment of this disclosure. The apparatus is applicable to an electronic device. The semantic segmentation model is configured to segment an image to obtain an object. The apparatus for generating a training sample for a semantic segmentation model may include: an obtaining module 10, a determining module 20, a first generation module 30, a second generation module 40, and a third generation module 50.

### (1) Obtaining module 10

The obtaining module 10 is configured to obtain an object identifier of a training object and a model file corresponding to the object identifier, the model file including a three-dimensional model of the training object and a skin picture set, the skin picture set including multiple solid-color skin pictures and multiple colorful skin pictures.

In this embodiment, the object identifier is a code manually generated by a user or automatically generated by a system for each game object (including the training object), and is used for uniquely identifying the game object in a game. Skin pictures in the skin picture set are textures. The colorful skin pictures may be generated by randomly selecting four colors from 256-color palette each time, and a quantity of the colorful skin pictures may be 256. The multiple solid-color skin pictures refer to textures with a single color, and may include a black skin picture and a white skin picture. The black skin picture refers to a solid-color skin picture in completely black, and the white skin picture refers to a solid-color skin picture in completely white. The three-dimensional model refers to a coordinate model formed by three-dimension coordinate points, and is used for describing a shape and a contour of the game object. Generally, different game objects have different three-dimensional models.

The model file may be manually inputted by the user, for example, manually extracted from a game package, or may be automatically obtained by the system. Therefore, the obtaining module 10 may be further configured to:
before obtaining an object identifier of a training object and a model file corresponding to the object identifier, determine an installation path of a game application;
determine, according to the installation path, multiple storage files with file suffixes matching a preset character string;
group the multiple storage files according to file names of the storage files, to obtain multiple storage file groups, file names in each of the storage file groups including a name of a same game object;
determine an object identifier of each game object; and
extract, for each game object, a model file from a storage file group corresponding to the game object, and copy and save the model file and the object identifier.

In this embodiment, after the game application is installed, a storage location of the game package may be located based on the installation path, and all storage files with suffixes matching the preset character string at the storage location are extracted; the storage files are grouped according to names of game objects in a way that storage files of the same game object are classified grouped into one group. For example, some storage files at the storage location may be as shown in FIG. 3, where the installation path may
be ..//com.tencent.tmgp.sgame/files/Resources/AssetBundle/, and the preset character string may be ".assetbundle". It can be seen from FIG. 3 that storage files displayed in the current page all as the same name "LianPo", that is, all these storage files are associated with a game object "LianPo" having an object identifier of 105.

### (2) Determining module 20

The determining module 20 is configured to determine transformed models of the three-dimensional model corresponding to different orientation angles, each of the orientation angles corresponding to one of the transformed models.

In this embodiment, the orientation angles may be manually preset. For example, 12 angles may be selected from 0° to 360°at an interval of every 30° as orientation angles, such as 0°, 30°, or 60°. Correspondingly, the three-dimensional model rotates by 0°, 30°, or 60° from a default angle to be the transformed model.

### (3) First generation module 30

The first generation module 30 is configured to generate multiple sample image groups corresponding to each transformed model according to the multiple colorful skin pictures and each transformed model, each of the sample image groups including multiple sample images.

For example, the first generation module 30 is specifically configured to:
render each transformed model according to each of the colorful skin pictures, to obtain multiple corresponding first rendered models;
project each of the first rendered models onto a game scene according to multiple preset projection directions, to obtain multiple first projection scenes, each of the projection directions corresponding to one of the first projection scenes;
generate an image of each of the first projection scenes, and use the generated image as a sample image; and
group sample images corresponding to a same preset projection direction and a same transformed model into one group, to obtain the multiple sample image groups.

In this embodiment, the first rendered model is obtained by rendering a transformed model with a colorful skin picture as a texture. The preset projection directions may be manually set. Due to translation invariance in deep learning network, it is unnecessary to generate images at various positions, and only images at left position, at middle position, and at right position are needed. In other words, the projection directions may be set to three types: a left region, a middle region, and a right region. The game scene is a three-dimensional scene. Coordinates of the first rendered model may be updated based on a coordinate system of the game scene, to project the first rendered model onto the game scene. Subsequently, a three-dimensional first projection scene may be outputted as a two-dimensional image by using a screen recording function of preset software, for example, unity3D software, to obtain a sample image. That is, animation of the first projection scene is generated by using the preset software, for example, unity3D software, and then an image is captured from the animation by using a screenshot function. The captured image is taken as the sample image.

Sample images corresponding to the same projection direction, the same orientation angle, and the same game object may be grouped into one group. For example, assuming that an object identifier is 075, the orientation angle O is 30°, and the projection direction P is LEFT, the sample image group may be named as 075_N1_ {001,002,..256} _O_30°_P_LEFT, and sample images in the sample image group may be named as 075_N1_xx _O_30°_P_LEFT, where N1 represents a colorful skin picture; and assuming that there are 256 colorful skin pictures sequentially marked as 001-256, xx is any value of {001,002,..256}, for example, 002.

### (4) Second generation module 40

The second generation module 40 is configured to generate a label image for each sample image group according to the object identifier, the multiple solid-color skin pictures, and each transformed model, the label image being used for labeling the sample images in the sample image group.

In this embodiment, the label image is used for labeling the sample images in the sample image group, for example, labeling a contour, an appearance, and an object identifier of a game object on a sample image. For sample images in the same sample image group, the same label image is used. Currently, a sample image is labeled manually, which has low efficiency.

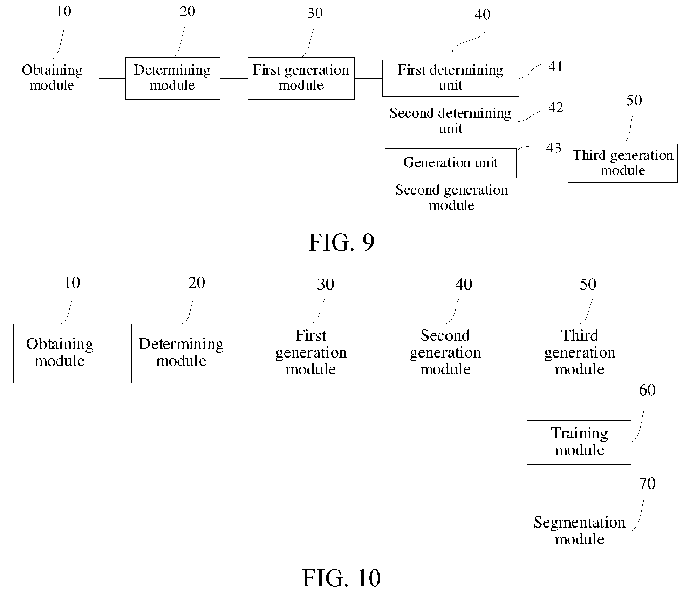

Referring to FIG. 9, the multiple solid-color skin pictures include a black skin picture and a white skin picture, and the second generation module 40 specifically includes:
a first determining unit 41, configured to determine multiple first reference image groups according to the black skin picture, multiple preset projection directions, and each transformed model;
a second determining unit 42, configured to determine multiple second reference image groups according to the white skin picture, the multiple preset projection directions, and each transformed model; and
a generation unit 43, configured to generate the label image for each sample image group according to the object identifier, the multiple first reference image groups, and the multiple second reference image groups.

In this embodiment, a game object may be colored in black and white separately, and a first reference image group is generated for the black game object at a same orientation angle (for example, 330°) with different projection directions (such as left, middle, and right), and a second reference image group is generated for the white game object at the same orientation angle with different projection directions.

It is noted that reference images in a same first reference image group or second reference image group may be named according to a specific rule. For example, assuming that an object identifier is 075, an orientation angle O is 30°, P represents preset projection directions (such as LEFT, MIDDLE, and RIGHT), and N0 represents a black skin picture or a white skin picture (such as black or white), a naming format of the first reference image group may be 075_N0_black_O_30°_P_ {LEFT, MIDDLE, RIGHT}, where a naming format of a single first reference image may be 075_N0_black_O_30° _P_zz, zz being any one of {LEFT, MIDDLE, RIGHT}, and a naming format of a single second reference image group may be 075_N0_white_O_30°_P_yy, yy being any one of {LEFT, MIDDLE, RIGHT}.

The first reference image group and the second reference image group are similarly generated. The generation of the first reference image group is described in detail, and the description of the generation of the second reference image group is omitted herein.

For example, the first determining unit 41 is specifically configured to:
render each transformed model according to the black skin picture, to obtain multiple corresponding second rendered models;
project each of the second rendered models onto a game scene according to the multiple preset projection directions, to obtain multiple second projection scenes, each of the projection directions corresponding to one of the second projection scenes;
generate an image of each of the second projection scenes, and take the generated image as a first reference image; and
group first reference images corresponding to a same transformed model into one group, to obtain the multiple first reference image groups.

In this embodiment, the second rendered model is obtained by rendering a transformed model with the black skin picture as a texture. Coordinates of the second rendered model may be updated based on a coordinate system of the game scene, to project the second rendered model onto the game scene. Subsequently, a three-dimensional second projection scene may be outputted as a two-dimensional image by using a screen recording function of preset software, for example, unity3D software, to obtain a first reference image.

For example, the generation unit 43 is specifically configured to:
obtain a first reference image and a second reference image that correspond to a same preset projection direction from a first reference image group and a second reference image group that correspond to a same transformed model;
convert a color of regions of black pixels in the obtained first reference image into white, and convert a color of remaining regions in the first reference image into black;
convert a color of regions in the obtained second reference image except for regions of white pixels into black; and
generate the label image corresponding to the sample image group according to the object identifier, the converted first reference image, and the converted second reference image.

In this embodiment, by color conversion of the first reference image and the second reference image, it can be ensured that game character is in white on each of the two reference images. However, a white region is inevitable due to existence of the sky, and a black region may be present due to something (for example, buildings) other than the game character on a game map which may interfere with recognition of the game objects, consequently affecting the accuracy of object segmentation. Therefore, the interference factors need to be filtered out.

Specifically, the generation unit 43 is specifically configured to:
determine an overlapping region where white pixels in the converted first reference image overlap with the white pixels in the converted second reference image;
convert a color of regions in the converted first reference image or the converted second reference image except for the overlapping region into black, to obtain a target reference image; and
convert a color of regions of white pixels in the target reference image into a color having a color value equal to a value of the object identifier, to obtain the label image of the sample image group corresponding to the same transformed model and the same preset projection direction.

In this embodiment, interferences affecting recognition of contours of game objects inevitably exist in the first reference image and the second reference image. However, because there is a high probability that the interferences in the two reference images are different from each other, when the two reference images are overlaid, a non-overlapping region is usually a region in which the interferences are located, and an overlapping region is a region in which the game object is located. Therefore, contour of the game object is easily recognized; and subsequently the recognized object contour is colored with a value of the object identifier, so that the contour and the object identifier can be associated.

### (5) Third generation module 50

The third generation module 50 is configured to generate a training sample of the training object according to the label image and the sample image group, to train the semantic segmentation model by using the training sample of the training object.

In this embodiment, each sample image and a corresponding label image may be used as a training sample. Generally, different sample images in a same sample image group all correspond to a same label image. For example, for a sample image group
075_N1_{001,002,..256}_O_30°_P_LEFT, a corresponding label image thereof may be 075_ O_30°_P_LEFT. That is, an association relationship between the sample image group and the corresponding label image is established for the same game object, orientation angle, and preset projection direction.

In addition, after a training sample of a game object is generated, the training sample may be used to train a deep learning model, to facilitate subsequent recognition of the game object by using the trained model. That is, referring to FIG. 10, the apparatus for generating a training sample further includes a training module 60 and a segmentation module 70.

The training module 60 is configured to: after the third generation module 50 generates the training sample of the training object according to the label image and the sample image group, input the training sample into a preset semantic segmentation model for training, to obtain a trained model.

The segmentation module 70 is configured to: obtain an object segmentation instruction, the object segmentation instruction carrying a target game image, the target game image including at least one segmentation object; and input the target game image into the trained model according to the object segmentation instruction, to obtain an object contour and an object identifier of the segmentation object.

In this embodiment, the semantic segmentation model may include an FCN model, a SegNet model, a Unet model, or the like. When the user intends to recognize game objects (namely, segmentation objects) on a game image, the game image may be input into the trained model as a target game image, to determine a shape, a contour, and an object identifier of each game object on the game image, thereby obtaining the game objects through segmentation.

In addition, after obtaining a game object from a game image, a propaganda poster may be generated based on the game object. That is, the segmentation module 70 is further configured to:
after the segmentation module 70 obtains the object contour and the object identifier of the segmentation object, extract an image corresponding to the segmentation object from the target game image according to the object contour;
obtain a target background image and a description of the object;
project the extracted image onto the target background image, to obtain a projection image; and
generate the description on the projection image, to obtain a cover image.

In this embodiment, the target background image may be extracted from the game scene, or may be specially designed. The description is mainly used for describing characteristic information such as skill or type of the object. The cover image generated based on the object, the target background image, and the description can be used to make a game promotion poster, a game guide, and the like.

In specific implementation, the foregoing units may be implemented as independent entities, or may be randomly combined, or may be implemented as one entity or several entities. For specific implementation of the foregoing units, reference may be made to the foregoing method embodiments. Details are not described herein again.

It can be learned from above that, according to the apparatus for generating a training sample provided in this embodiment, the obtaining module 10 obtains an object identifier of a training object and a model file corresponding to the object identifier, the model file including a three-dimensional model and a skin picture set, the skin picture set including multiple solid-color skin pictures and multiple colorful skin pictures; subsequently the determining module 20 determines transformed models of the three-dimensional model corresponding to different orientation angles, each of the orientation angles corresponding to one of the transformed models; the first generation module 30 generates multiple sample image groups according to the multiple colorful skin pictures and the transformed model; subsequently the second generation module 40 generates a label image for the each sample image group according to the object identifier, the multiple solid-color skin pictures, and the transformed model; and the third generation module 50 generates a training sample of the training object according to the label image and the sample image group. Therefore, sample images and the label image can be automatically generated without manual screenshots and labeling. The method is convenient, and is efficient and effective in sample generation.

Correspondingly, the embodiments of this disclosure further provide a system for generating a training sample, including any apparatus for generating a training sample provided in the embodiments of this disclosure. The apparatus for generating a training sample may be integrated in an electronic device.

The electronic device may obtain an object identifier of a training object and a model file corresponding to the object identifier, the model file including a three-dimensional model and a skin picture set, the skin picture set including multiple solid-color skin pictures and multiple colorful skin pictures; determine transformed models of the three-dimensional model corresponding to different orientation angles, each of the orientation angles corresponding to one of the transformed models; generate multiple sample image groups according to the multiple colorful skin pictures and the transformed model; generate a label image for each sample image group according to the object identifier, the multiple solid-color skin pictures, and the transformed model; and generate a training sample of the training object according to the label image and the sample image group.

For specific implementation of the foregoing devices, reference may be made to the foregoing embodiments. Details are not described herein again.

The system for generating a training sample may include any apparatus for generating a training sample provided in the embodiments of this disclosure, hence the system for generating a training sample can implement beneficial effects that may be implemented by any apparatus for generating a training sample provided in the embodiments of this disclosure. For details, reference may be made to the foregoing embodiments, and description thereof is omitted herein.

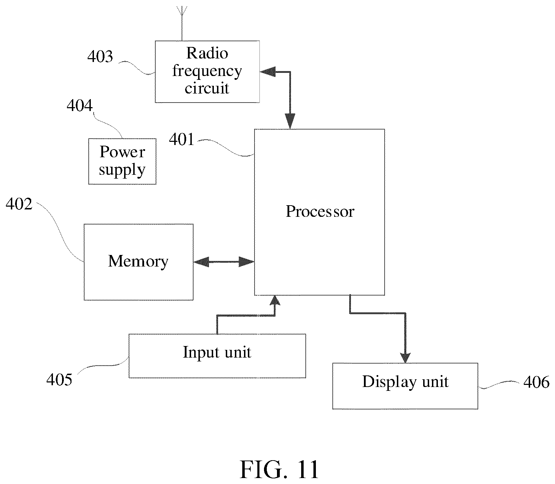

Correspondingly, the embodiments of this disclosure further provide an electronic device. FIG. 11 is a schematic structural diagram of an electronic device according to an embodiment of this disclosure.

The electronic device may include a processor 401 including one or more processing cores, a memory 402 including one or more computer-readable storage media, a radio frequency (RF) circuit 403, a power supply 404, an input unit 405, a display unit 406, and other components. A person skilled in the art may understand that the electronic device structure shown in FIG. 11 does not constitute a limitation to the electronic device. The electronic device may include more or fewer components than those shown in the drawing, or some components may be combined, or a different component deployment may be used.

The processor 401 is a control center of the electronic device, and connects to various parts of the electronic device via various interfaces and lines. By running or executing software programs and/or modules stored in the memory 402 and invoking data stored in the memory 402, the processor 401 performs various functions of the electronic device and processes data, thereby performing overall monitoring on the electronic device. The processor 401 may include one or more processing cores. The processor 401 may be integrated with an application processor and a modem processor. The application processor is mainly responsible for operating system, user interface, applications, and the like. The modem processor is mainly responsible for wireless communication. It can be understood that the modem processor may alternatively not be integrated into the processor 401.

The memory 402 may be configured to store software programs and modules, and the processor 401 runs the software programs and modules stored in the memory 402 to implement various functional applications and data processing. The memory 402 may mainly include a program storage area and a data storage area. The program storage area may store an operating system, an application required for at least one function (such as sound playback function and image display function), and the like. The data storage area may store data created for usage of the electronic device, and the like. In addition, the memory 402 may include a high speed random access memory, or may include a non-volatile memory such as at least one magnetic disk storage device, a flash memory, or another volatile solid-state storage device. Correspondingly, the memory 402 may further include a memory controller, to allow the processor 401 to access the memory 402.

The RF circuit 403 may be configured to receive and transmit signals during an information receiving and transmitting process. Particularly, after receiving downlink information from a base station, the RF circuit delivers the downlink information to one or more processors 401 for processing, and transmits related uplink data to the base station. Generally, the RF circuit 403 includes but is not limited to, an antenna, at least one amplifier, a tuner, one or more oscillators, a subscriber identity module (SIM) card, a transceiver, a coupler, a low noise amplifier (LNA), duplexer, and the like. In addition, the RF circuit 403 may communicate with a network and another device by wireless communication. The wireless communication may follow any communication standard or protocol, including but not limited to, the Global System of Mobile Communications (GSM), general packet radio service (GPRS), and Code Division Multiple Access (CDMA), Wideband Code Division Multiple Access (WCDMA), Long Term Evolution (LTE), email, short messaging service (SMS), and the like.

The electronic device further includes the power supply 404 (for example, a battery) for supplying power to the components. The power supply 404 may logically connect to the processor 401 via a power supply management system, thereby implementing functions such as charging, discharging, and power consumption management by the power supply management system. The power supply 404 may further include one or more of a direct current or alternating current power supply, a re-charging system, a power failure detection circuit, a power supply converter or inverter, a power supply state indicator, and any other component.

The electronic device may further include the input unit 405. The input unit 405 may be configured to receive inputted numeric or character information and generate signal input of keyboard, mouse, joystick, optical, or trackball related to user settings and function control. Specifically, in a specific embodiment, the input unit 405 may include touch-sensitive surface and any other input device. The touch-sensitive surface, which may also be referred to as touch screen or touch panel, may collect a touch operation of a user on or near the touch-sensitive surface (such as an operation of a user on or near the touch-sensitive surface by using any suitable object or accessory such as a finger or a stylus), and drive a corresponding connected apparatus according to a preset program. The touch-sensitive surface may include a touch detection apparatus and a touch controller. The touch detection apparatus detects a position of user touch, detects a signal generated by the touch operation, and transfers the signal to the touch controller. The touch controller receives the touch information from the touch detection apparatus, converts the touch information into touch point coordinates, and transmits the touch point coordinates to the processor 401. Moreover, the touch controller can receive and execute a command transmitted from the processor 401. In addition, the touch-sensitive surface may be implemented in multiple types, such as a resistive type, a capacitive type, an infrared type, and a surface acoustic wave type. In addition to the touch-sensitive surface, the input unit 405 may include other input devices. Specifically, the input devices may include, but not limited to, one or more of a physical keyboard, a function key (such as a volume control key or a switch key), a trackball, a mouse, a joystick, and the like.

The electronic device may further include the display unit 406. The display unit 406 may be configured to display information entered by the user or information provided for the user, and to display various graphical user interfaces of the electronic device. The graphical user interfaces may be formed by graphs, texts, icons, videos, or any combination thereof. The display unit 406 may include a display panel. The display panel may be configured in the form of a liquid crystal display (LCD), an organic light-emitting diode (OLED), or the like. Further, the touch-sensitive surface may cover the display panel. After detecting a touch operation on or near the touch-sensitive surface, the touch-sensitive surface transfers the touch operation to the processor 401 to determine a type of the touch event, and then the processor 401 provides corresponding visual output on the display panel according to the type of the touch event. Although, the touch-sensitive surface and the display panel are shown in FIG. 11 as two separate components to implement input and output, in some embodiments, the touch-sensitive surface and the display panel may be integrated to implement the input and output.

Although not shown, the electronic device may further include a camera, a Bluetooth module, and the like, which are not described herein. Specifically, in this embodiment, the processor 401 of the electronic device may load, according to the following instructions, executable files corresponding to processes of one or more applications into the memory 402. The processor 401 runs the applications stored in the memory 402, to implement the various functions as follows:
obtaining an object identifier of a training object and a model file corresponding to the object identifier, the model file including a three-dimensional model and a skin picture set, the skin picture set including multiple solid-color skin pictures and multiple colorful skin pictures;
determining transformed models of the three-dimensional model corresponding to different orientation angles, each of the orientation angles corresponding to one of the transformed models;
generating multiple sample image groups according to the multiple colorful skin pictures and the transformed models;
generating a label image for each sample image group according to the object identifier, the multiple solid-color skin pictures, and the transformed models; and
generating a training sample of the training object according to the label image and the sample image group.

The electronic device can implement beneficial effects that may be implemented by any apparatus for generating a training sample provided in the embodiments of this disclosure. For details, reference may be made to the foregoing embodiments. Details are not described herein again.

A person of ordinary skill in the art may understand that, all or some of the steps of the methods in the foregoing embodiments may be implemented by hardware being instructed by a program. The program may be stored in a computer-readable storage medium. The storage medium may include: a read only memory (ROM), a random access memory (RAM), a magnetic disk, an optical disc, or the like.

## Claims

1. A method for generating a training sample for a semantic segmentation model, the semantic segmentation model being configured to segment an image to obtain an object, the method being performed by a backend server of a game provider, and comprising:
obtaining (S101) an object identifier of a training object and a model file corresponding to the object identifier, the model file comprising a three-dimensional model of the training object and a skin picture set, the skin picture set comprising a plurality of solid-color skin pictures and a plurality of colorful skin pictures, wherein the object identifier is a code used for uniquely identifying the object in a game, wherein the skin picture is a texture of the object to give it an appearance;
determining (S102) a transformed model by rotating the three-dimensional model by an orientation angle;
generating (S103), according to the plurality of colorful skins and the transformed model, a sample image group corresponding to the transformed model, the sample image group comprising a plurality of sample images each corresponding to one of the plurality of colorful skin pictures;
generating (S104) a label image for the sample image group according to the object identifier, the plurality of solid-color skin pictures, and the transformed model, the label image being used for labeling the sample images in the sample image group, the label image being an image obtained by labeling a contour, an appearance and an object identifier of an object on the sample image, an association relationship between the sample image group and the corresponding label image being established for the same object, orientation angles, and preset projection directions;
generating (S105) a training sample of the training object according to the label image and the sample image group, to train the semantic segmentation model by using the training sample of the training object;
wherein after the generating (S105) the training sample of the training object according to the label image and the sample image group, the method further comprises:
inputting (S106) the training sample into a preset semantic segmentation model for training, to obtain a trained model;
obtaining (S107) an object segmentation instruction, the object segmentation instruction carrying a target game image, the target game image comprising at least one segmentation object; and
inputting (S108) the target game image into the trained model according to the object segmentation instruction, to obtain an object contour and an object identifier of the segmentation object.

2. The method according to claim 1, wherein the generating (S103) the sample image group corresponding to the transformed model according to the plurality of colorful skin pictures and the transformed model comprises:
rendering the transformed model according to each of the colorful skin pictures, to obtain a plurality of first rendered models;
projecting each of the first rendered models onto a game scene at a preset projection direction, to obtain a plurality of first projection scenes;
generating an image of each of the first projection scenes, and taking the generated image as a sample image; and
grouping the sample images corresponding to the preset projection direction and the transformed model as the sample image group.

3. The method according to claim 1, wherein the plurality of solid-color skin pictures comprise a black skin picture and a white skin picture, and the generating (S104) the label image for the sample image group according to the object identifier, the plurality of solid-color skin pictures, and the transformed model comprises:
determining (S1041) a first reference image group according to the black skin picture, a plurality of preset projection directions, and the transformed model;
determining (S1042) a second reference image group according to the white skin picture, the plurality of preset projection directions, and the transformed model; and
generating (S1043) the label image for the sample image group according to the object identifier, the first reference image group, and the second reference image group.

4. The method according to claim 3, wherein the determining (S1041) the first reference image group according to the black skin picture, the plurality of preset projection directions, and the transformed model comprises:
rendering (S411) the transformed model according to the black skin picture, to obtain a second rendered model;
projecting (S412) the second rendered model onto a game scene according to the plurality of preset projection directions, to obtain a plurality of second projection scenes, each of the projection directions corresponding to one of the second projection scenes;
generating (S413) an image of each of the second projection scenes, and taking the generated image as a first reference image; and
grouping (S414) the first reference images as the first reference image group.

5. The method according to claim 3, wherein the generating (S1043) the label image for the sample image group according to the object identifier, the first reference image group, and the second reference image group comprises:
obtaining (S431) a first reference image and a second reference image that correspond to a same preset projection direction from the first reference image group and the second reference image group;
converting (S432) a color of regions of black pixels in the obtained first reference image into white, and converting a color of remaining region in the first reference image into black;
converting (S433) a color of regions in the obtained second reference image except for regions of white pixels into black; and
generating (S434) the label image corresponding to the sample image group according to the object identifier, the converted first reference image, and the converted second reference image.

6. The method according to claim 5, wherein the generating (S434) the label image corresponding to the sample image group according to the object identifier, the converted first reference image, and the converted second reference image comprises:
determining (S4341) an overlapping region where white pixels in the converted first reference image overlap with the white pixels in the converted second reference image;
converting (S4342) a color of regions in the converted first reference image or the converted second reference image except for the overlapping region into black, to obtain a target reference image; and
converting (S4343) a color of regions of white pixels in the target reference image into a color having a color value equal to a value of the object identifier, to obtain the label image for the sample image group corresponding to the same transformed model and the same preset projection direction.

7. The method according to claim 1, wherein after the object contour and the object identifier of the segmentation object are obtained, the method further comprises:
extracting (S109) an image corresponding to the segmentation object from the target game image according to the object contour;
obtaining (S110) a target background image and a description of the object;
projecting (S111) the extracted image onto the target background image, to obtain a projection image; and
generating (S112) the description on the projection image, to obtain a cover image.

8. The method according to claim 1, wherein before the obtaining (S101) the object identifier of the training object and the model file corresponding to the object identifier, the method further comprises:
determining an installation path of a game application;
determining, according to the installation path, a plurality of storage files with file suffixes matching a preset character string;
grouping the plurality of storage files according to file names of the storage files, to obtain a plurality of storage file groups, file names in each of the storage file groups comprising a name of a same game object;
determining an object identifier of each game object; and
extracting, for each game object, a model file from a storage file group corresponding to the game object, and copying and saving the model file and the object identifier.

9. A computer-readable storage medium storing a plurality of instructions, the plurality of instructions being configured to be loaded by a processor, to perform the method according to any one of claims 1 to 8.

10. An electronic device comprising a processor and a memory, the processor being electrically connected to the memory, the memory being configured to store instructions and data, and the processor being configured to perform the operations in the method according to any one of claims 1 to 8.

## Patentansprüche

1. Verfahren zum Erzeugen eines Trainingsbeispiels für ein semantisches Segmentierungsmodell, wobei das semantische Segmentierungsmodell dazu ausgelegt ist, ein Bild zu segmentieren, um ein Objekt zu erhalten, wobei das Verfahren von einem Backendserver eines Spieleanbieters durchgeführt wird und Folgendes umfasst:
Erhalten (S101) einer Objektkennung eines Trainingsobjekts und einer Modelldatei, die der Objektkennung entspricht, wobei die Modelldatei ein dreidimensionales Modell des Trainingsobjekts und einen Hautabbildungssatz umfasst, wobei der Hautabbildungssatz eine Vielzahl von einfarbigen Hautabbildungen und eine Vielzahl von farbigen Hautabbildungen umfasst, wobei die Objektkennung ein Code ist, der zum eindeutigen Identifizieren des Objekts in einem Spiel verwendet wird, wobei die Hautabbildung eine Textur des Objekts ist, um ihr ein Erscheinungsbild zu geben;
Bestimmen (S102) eines umgewandelten Modells durch Drehen des dreidimensionalen Modells um einen Ausrichtungswinkel;
Erzeugen (S103) einer Beispielbildgruppe, die dem umgewandelten Modell entspricht, gemäß der Vielzahl von farbigen Häuten und des umgewandelten Modells, wobei die Beispielbildgruppe eine Vielzahl von Beispielbildern umfasst, von denen jedes einer der Vielzahl von farbigen Hautabbildungen entspricht;
Erzeugen (S104) eines Labelbildes für die Beispielbildgruppe gemäß der Objektkennung, der Vielzahl von einfarbigen Hautabbildungen und dem umgewandelten Modell, wobei das Labelbild zum Kennzeichnen der Beispielbilder in der Beispielbildgruppe verwendet wird, wobei das Labelbild ein Bild ist, das durch Kennzeichnen einer Kontur, eines Erscheinungsbildes und einer Objektkennung eines Objekts des Beispielbildes erhalten wird, wobei zwischen der Beispielbildgruppe und dem entsprechenden Labelbild für dasselbe Objekt, Ausrichtungswinkel und voreingestellte Projektionsrichtungen eine Verknüpfungsbeziehung aufgebaut wird;
Erzeugen (S105) eines Trainingsbeispiels des Trainingsobjekts gemäß dem Labelbild und der Beispielbildgruppe, um das semantische Segmentierungsmodell unter Verwendung des Trainingsbeispiels des Trainingsobjekts zu trainieren;
wobei das Verfahren nach dem Erzeugen (S105) eines Trainingsbeispiels des Trainingsobjekts gemäß dem Labelbild und der Beispielbildgruppe ferner Folgendes umfasst:
Eingeben (S106) des Trainingsbeispiels in ein voreingestelltes semantisches Segmentierungsmodell zum Trainieren, um ein trainiertes Modell zu erhalten;
Erhalten (S107) einer Objektsegmentierungsanweisung, wobei die Objektsegmentierungsanweisung ein Zielspielbild enthält, wobei das Zielspielbild mindestens ein Segmentierungsobjekt umfasst; und
Eingeben (S108) des Zielspielbildes gemäß der Objektsegmentierungsanweisung in das trainierte Modell, um eine Objektkontur und eine Objektkennung des Segmentierungsobjekts zu erhalten.

2. Verfahren nach Anspruch 1, wobei das Erzeugen (S103) der Beispielbildgruppe, die dem umgewandelten Modell entspricht, gemäß der Vielzahl von farbigen Hautabbildungen und dem umgewandelten Modell Folgendes umfasst:
Rendern des umgewandelten Modells gemäß jedem der farbigen Hautabbildungen, um eine Vielzahl von ersten gerenderten Modellen zu erhalten;
Projizieren von jedem der ersten gerenderten Modelle in einer voreingestellten Projektionsrichtung auf eine Spielszene, um eine Vielzahl von ersten Projektionsszenen zu erhalten;
Erzeugen eines Bildes von jeder der ersten Projektionsszenen und Übernehmen des erzeugten Bildes als ein Beispielbild; und
Gruppieren der Beispielbilder, die der voreingestellten Projektionsrichtung und dem umgewandelten Modell entsprechen, als die Beispielbildgruppe.

3. Verfahren nach Anspruch 1, wobei die Vielzahl von einfarbigen Hautabbildungen eine schwarze Hautabbildung und eine weiße Hautabbildung umfassen, und das Erzeugen (S104) des Labelbildes für die Beispielbildgruppe gemäß der Objektkennung, der Vielzahl von einfarbigen Hautabbildungen und dem umgewandelten Modell Folgendes umfasst:
Bestimmen (S1041) einer ersten Referenzbildgruppe gemäß der schwarzen Hautabbildung, einer Vielzahl von voreingestellten Projektionsrichtungen und dem umgewandelten Modell;
Bestimmen (S1042) einer zweiten Referenzbildgruppe gemäß der weißen Hautabbildung, der Vielzahl von voreingestellten Projektionsrichtungen und dem umgewandelten Modell; und
Erzeugen (S1043) des Labelbildes für die Beispielbildgruppe gemäß der Objektkennung, der ersten Referenzbildgruppe und der zweiten Referenzbildgruppe.

4. Verfahren nach Anspruch 3, wobei das Bestimmen (S1041) der ersten Referenzbildgruppe gemäß der schwarzen Hautabbildung, der Vielzahl von voreingestellten Projektionsrichtungen und dem umgewandelten Modell Folgendes umfasst:
Rendern (S411) des umgewandelten Modells gemäß der schwarzen Hautabbildung, um ein zweites gerendertes Modell zu erhalten;
Projizieren (S412) des zweiten gerenderten Modells gemäß der Vielzahl von voreingestellten Projektionsrichtungen auf eine Spielszene, um eine Vielzahl von zweiten Projektionsszenen zu erhalten, wobei jede der Projektionsrichtungen einer der zweiten Projektionsszenen entspricht;
Erzeugen (S413) eines Bildes von jeder der zweiten Projektionsszenen und Übernehmen des erzeugten Bildes als das erste Referenzbild; und
Gruppieren (S414) des ersten Referenzbildes als die erste Referenzbildgruppe.

5. Verfahren nach Anspruch 3, wobei das Erzeugen (S1043) des Labelbildes für die Beispielbildgruppe gemäß der Objektkennung, der ersten Referenzbildgruppe und der zweiten Referenzbildgruppe Folgendes umfasst:
Erhalten (S431) eines ersten Referenzbildes und eines zweiten Referenzbildes, die einer selben voreingestellten Projektionsrichtung entsprechen, von der ersten Referenzbildgruppe und der zweiten Referenzbildgruppe;
Umwandeln (S432) einer Farbe von Regionen von schwarzen Pixeln im erhaltenen ersten Referenzbild in weiß, und Umwandeln einer Farbe einer verbleibenden Region im ersten Referenzbild in schwarz;
Umwandeln (S433) einer Farbe von Regionen im erhaltenen zweiten Referenzbild außer den Regionen von weißen Pixeln in schwarz; und
Erzeugen (S434) des Labelbildes, das der Beispielbildgruppe entspricht, gemäß der Objektkennung, dem umgewandelten ersten Referenzbild und dem umgewandelten zweiten Referenzbild.

6. Verfahren nach Anspruch 5, wobei das Erzeugen (S434) des Labelbildes, das der Beispielbildgruppe entspricht, gemäß der Objektkennung, dem umgewandelten ersten Referenzbild und dem umgewandelten zweiten Referenzbild Folgendes umfasst:
Bestimmen (S4341) einer Überlappungsregion, in der sich weiße Pixel im umgewandelten ersten Referenzbild mit den weißen Pixeln im umgewandelten zweiten Referenzbild überlappen;
Umwandeln (S4342) einer Farbe von Regionen im umgewandelten ersten Referenzbild oder im umgewandelten zweiten Referenzbild außer der Überlappungsregion in schwarz, um ein Zielreferenzbild zu erhalten; und
Umwandeln (S4343) einer Farbe von Regionen von weißen Pixeln im Zielreferenzbild in eine Farbe, die einen Farbwert aufweist, der gleich einem Wert der Objektkennung ist, um das Labelbild für die Beispielbildgruppe zu erhalten, die demselben umgewandelten Modell und derselben voreingestellten Projektionsrichtung entspricht.

7. Verfahren nach Anspruch 1, wobei das Verfahren, nachdem die Objektkontur und die Objektkennung des Segmentierens Objekts erhalten wurden, ferner Folgendes umfasst:
Extrahieren (S109) eines Bildes, das dem Segmentierungsobjekt entspricht, aus dem Zielspielbild gemäß der Objektkontur;
Erhalten (S110) eines Zielhintergrundbildes und einer Beschreibung des Objekts;
Projizieren (S111) des extrahierten Bildes auf das Zielhintergrundbild, um ein Projektionsbild zu erhalten; und
Erzeugen (S112) der Beschreibung des Projektionsbildes, um ein Titelbild zu erhalten.

8. Verfahren nach Anspruch 1, wobei das Verfahren vor dem Erhalten (S101) der Objektkennung des Trainingsobjekts und der Modelldatei, die der Objektkennung entspricht, ferner Folgendes umfasst:
Bestimmen eines Installationspfades einer Spielanwendung;
Bestimmen einer Vielzahl von Speicherdateien mit Dateisuffixen, die mit einer voreingestellten Zeichenfolge übereinstimmen, gemäß dem Installationspfad;
Gruppieren der Vielzahl von Speicherdateien gemäß den Dateinamen der Speicherdateien, um eine Vielzahl von Speicherdateigruppen zu erhalten, wobei Dateinamen in jeder der Speicherdateigruppen einen Namen eines selben Spielobjekts umfassen;
Bestimmen einer Objektkennung von jedem Spielobjekt; und
Extrahieren einer Modelldatei aus einer Speicherdateigruppe, die dem Spielobjekt entspricht, und Kopieren und Speichern der Modelldatei und der Objektkennung für jedes Spielobjekt.

9. Computerlesbares Speichermedium, auf dem eine Vielzahl von Anweisungen gespeichert sind, wobei die Vielzahl von Anweisungen dazu ausgelegt sind, von einem Prozessor geladen zu werden, um das Verfahren nach einem der Ansprüche 1 bis 8 durchzuführen.

10. Elektronische Vorrichtung, die einen Prozessor und einen Speicher umfasst, wobei der Prozessor elektrisch mit dem Speicher verbunden ist, wobei der Speicher dazu ausgelegt ist, Anweisungen und Daten zu speichern, und wobei der Prozessor dazu ausgelegt ist, die Operationen im Verfahren nach einem der Ansprüche 1 bis 8 durchzuführen.

## Revendications

1. Procédé pour générer un échantillon d'entraînement pour un modèle de segmentation sémantique, le modèle de segmentation sémantique étant configuré pour segmenter une image afin d'obtenir un objet, le procédé étant réalisé par un serveur dorsal d'un fournisseur de jeu, et comprenant les opérations suivantes :
obtenir (S101) un identifiant d'objet d'un objet d'entraînement et un fichier de modèle correspondant à l'identifiant d'objet, le fichier de modèle comprenant un modèle tridimensionnel de l'objet d'entraînement et un ensemble de photos d'habillage, l'ensemble de photos d'habillage comprenant une pluralité de photos d'habillage de couleur unie et une pluralité de photos d'habillage colorées, dans lequel l'identifiant d'objet est un code utilisé pour identifier de manière unique l'objet dans un jeu, dans lequel la photo d'habillage est une texture de l'objet pour lui donner un aspect ;
déterminer (S102) un modèle transformé en faisant pivoter le modèle tridimensionnel selon un angle d'orientation ;
selon la pluralité d'habillages colorés et le modèle transformé, générer (S103) un groupe d'images échantillons correspondant au modèle transformé, le groupe d'images échantillons comprenant une pluralité d'images échantillons correspondant chacune à l'une de la pluralité de photos d'habillage colorées ;
générer (S104) une image d'étiquette pour le groupe d'images échantillons selon l'identifiant d'objet, la pluralité de photos d'habillage de couleur unie et le modèle transformé, l'image d'étiquette étant utilisée pour étiqueter les images échantillons du groupe d'images échantillons, l'image d'étiquette étant une image obtenue en étiquetant un contour, un aspect et un identifiant d'objet d'un objet sur l'image échantillon, une relation d'association entre le groupe d'images échantillons et l'image d'étiquette correspondante étant établie pour le même objet, les angles d'orientation et des directions de projection prédéfinies ;
générer (S105) un échantillon d'entraînement de l'objet d'entraînement selon l'image d'étiquette et le groupe d'images échantillons pour entraîner le modèle de segmentation sémantique en utilisant l'échantillon d'entraînement de l'objet d'entraînement ;
dans lequel, après la génération (S105) de l'échantillon d'entraînement de l'objet d'entraînement selon l'image d'étiquette et le groupe d'images échantillons, le procédé comprend en outre les opérations suivantes :
entrer (S106) l'échantillon d'entraînement dans un modèle de segmentation sémantique prédéfini pour l'entraîner, afin d'obtenir un modèle entraîné ;
obtenir (S107) une instruction de segmentation d'objet, l'instruction de segmentation d'objet transportant une image de jeu cible, l'image de jeu cible comprenant au moins un objet de segmentation ; et
entrer (S108) l'image de jeu cible dans le modèle entraîné selon l'instruction de segmentation d'objet afin d'obtenir un contour d'objet et un identifiant d'objet de l'objet de segmentation.

2. Procédé selon la revendication 1, dans lequel la génération (S103) du groupe d'images échantillons correspondant au modèle transformé selon la pluralité de photos d'habillage colorées et au modèle transformé comprend ce qui suit :
rendre le modèle transformé selon chacune des photos d'habillage colorées afin d'obtenir une pluralité de premiers modèles rendus ;
projeter chacun des premiers modèles rendus sur une scène de jeu dans une direction de projection prédéfinie afin d'obtenir une pluralité de premières scènes de projection ;
générer une image de chacune des premières scènes de projection, et prendre l'image générée comme image échantillon ; et
grouper les images échantillons correspondant à la direction de projection prédéfinie et le modèle transformé sous forme de groupe d'images échantillons.

3. Procédé selon la revendication 1, dans lequel la pluralité de photos d'habillage de couleur unie comprend une photo d'habillage noire et une photo d'habillage blanche, et la génération (S104) de l'image d'étiquette pour le groupe d'images échantillons selon l'identifiant d'objet, la pluralité de photos d'habillage de couleur unie et le modèle transformé comprend ce qui suit :
déterminer (S1041) un premier groupe d'images de référence selon la photo d'habillage noire, une pluralité de directions de projection prédéfinies et le modèle transformé ;
déterminer (S1042) un deuxième groupe d'images de référence selon la photo d'habillage blanche, la pluralité de directions de projection prédéfinies et le modèle transformé ; et
générer (S1043) l'image d'étiquette pour le groupe d'images échantillons selon l'identifiant d'objet, le premier groupe d'images de référence et le deuxième groupe d'images de référence.

4. Procédé selon la revendication 3, dans lequel la détermination (S1041) du premier groupe d'images de référence selon la photo d'habillage noire, la pluralité de directions de projection prédéfinies et le modèle transformé comprend ce qui suit :
rendre (S411) le modèle transformé selon la photo d'habillage noire afin d'obtenir un deuxième modèle rendu ;
projeter (S412) le deuxième modèle rendu sur une scène de jeu selon la pluralité de directions de projection prédéfinies afin d'obtenir une pluralité de deuxièmes scènes de projection, chacune des directions de projection correspondant à l'une des deuxièmes scènes de projection ;
générer (S413) une image de chacune des deuxièmes scènes de projection, et prendre l'image générée comme première image de référence ; et
grouper (S414) les premières images de référence sous forme de premier groupe d'images de référence.

5. Procédé selon la revendication 3, dans lequel la génération (S1043) de l'image d'étiquette pour le groupe d'images échantillons selon l'identifiant d'objet, le premier groupe d'images de référence et le deuxième groupe d'images de référence comprend ce qui suit :
obtenir (S431) une première image de référence et une deuxième image de référence qui correspondent à une même direction de projection prédéfinie à partir du premier groupe d'images de référence et du deuxième groupe d'images de référence ;
convertir (S432) en blanc une couleur de régions de pixels noirs dans la première image de référence obtenue, et convertir en noir une couleur de la région restante dans la première image de référence ;
convertir (S433) en noir une couleur de régions dans la deuxième image de référence obtenue à l'exception des régions de pixels blancs ; et
générer (S434) l'image d'étiquette correspondant au groupe d'images échantillons selon l'identifiant d'objet, la première image de référence convertie et la deuxième image de référence convertie.

6. Procédé selon la revendication 5, dans lequel la génération (S434) de l'image d'étiquette correspondant au groupe d'images échantillons selon l'identifiant d'objet, la première image de référence convertie et la deuxième image de référence convertie comprend ce qui suit :
déterminer (S4341) une région de chevauchement où les pixels blancs dans la première image de référence convertie se chevauchent avec les pixels blancs dans la deuxième image de référence convertie ;
convertir (S4342) en noir une couleur de régions dans la première image de référence convertie ou la deuxième image de référence convertie à l'exception de la région de chevauchement, afin d'obtenir une image de référence cible ; et
convertir (S4343) une couleur de régions de pixels blancs dans l'image de référence cible en une couleur ayant une valeur de couleur égale à une valeur de l'identifiant d'objet, afin d'obtenir l'image d'étiquette pour le groupe d'images échantillons correspondant au même modèle transformé et à la même direction de projection prédéfinie.

7. Procédé selon la revendication 1, dans lequel, après avoir obtenu le contour d'objet et l'identifiant d'objet de l'objet de segmentation, le procédé comprend en outre les opérations suivantes :
extraire (S109) une image correspondant à l'objet de segmentation à partir de l'image de jeu cible selon le contour d'objet ;
obtenir (S110) une image d'arrière-plan cible et une description de l'objet ;
projeter (S111) l'image extraite sur l'image d'arrièreplan cible afin d'obtenir une image de projection ; et
générer (S112) la description sur l'image de projection, afin d'obtenir une image de couverture.

8. Procédé selon la revendication 1, dans lequel, avant l'obtention (S101) de l'identifiant d'objet de l'objet d'entraînement et du fichier de modèle correspondant à l'identifiant d'objet, le procédé comprend en outre les opérations suivantes :
déterminer un chemin d'installation d'une application de jeu ;
selon le chemin d'installation, déterminer une pluralité de fichiers de stockage avec des suffixes de fichiers appariés à une chaîne de caractères prédéfinie ;
grouper la pluralité de fichiers de stockage selon les noms de fichiers des fichiers de stockage afin d'obtenir une pluralité de groupes de fichiers de stockage, les noms de fichiers dans chacun des groupes de fichiers de stockage comprenant un nom d'un même objet de jeu ;
déterminer un identifiant d'objet de chaque objet de jeu ; et
pour chaque objet de jeu, extraire un fichier de modèle à partir d'un groupe de fichiers de stockage correspondant à l'objet de jeu, et copier et sauvegarder le fichier de modèle et l'identifiant d'objet.

9. Support de stockage lisible par ordinateur stockant une pluralité d'instructions, la pluralité d'instructions étant configurée pour être chargée par un processeur afin de réaliser le procédé selon l'une des revendications 1 à 8.

10. Dispositif électronique comprenant un processeur et une mémoire, le processeur étant connecté électriquement à la mémoire, la mémoire étant configurée pour stocker des instructions et des données, et le processeur étant configuré pour réaliser les opérations du procédé selon l'une des revendications 1 à 8.
